Europäisches Patentamt

(19) European Patent Office

Office européen des brevets

(11) Publication number: **0 325 539**
**A1**

(12) **EUROPEAN PATENT APPLICATION**

(21) Application number: **89400160.1**

(22) Date of filing: **19.01.89**

(51) Int. Cl.⁴: **G 01 S 13/02**
**H 01 Q 15/18**

(30) Priority: **19.01.88 CA 556852**

(43) Date of publication of application:
**26.07.89 Bulletin 89/30**

(84) Designated Contracting States:
**AT BE CH DE ES FR GB GR IT LI LU NL SE**

(71) Applicant: **OFFSHORE SYSTEMS LTD.**
**1974 Spicer Road**
**North Vancouver British Columbia V7H 1A2 (CA)**

(72) Inventor: **Lanziner, Helmut Hans**
**1974 Spicer Road**
**North Vancouver British Columbia V7H 1A2 (CA)**

(74) Representative: **Chameroy, Claude et al**
**c/o Cabinet Malemont 42, avenue du Président Wilson**
**F-75116 Paris (FR)**

(54) **Positioning system for a moving object.**

㊗ A locating system for a moving object. The system includes a radar source able to emit a circularly polarised radar beam and a plurality of even bounce reflectors to be positioned at predetermined locations around the moving object. The systems has the virtues of good discrimination and low cost.

*Fig. B.*

EP 0 325 539 A1

Description

## FIELD OF THE INVENTION

This invention relates to a locating system for a moving object, particularly a ship although it has application for vehicles and some aircraft.

## DESCRIPTION OF THE PRIOR ART

When docking ships or navigating through narrow channels and canals conventional chart plotting techniques are usually not adequate. The time required to obtain multiple radar images and bearings and to transfer this information onto a paper chart takes a number of seconds and, in certain circumstances, can exceed a minute. In addition to this time delay, which can be critical, the accuracy of the radar range is not adequate to provide a usable docking system, nor does it meet the requirements of restricted seaway and channel navigation.

The generally available navigation and positioning aids, for example those available under trade mark Loran-C, Omega and satellite positioning systems are not precise enough at the present time. The NAVSTAR Global Positioning System appears to have the potential to provide position accuracy better than 100 meters in many circumstances once all the satellites of the system are up to and operating but that will not be on a 24 hour basis before 1990.

As a result of the above it is common, in obtaining precision of position - which in certain water ways and docks must be within 2 or 3 meters - to set up a microwave transponder network around the operating area. These transponders are surveyed at specific locations on shore and respond to an interrogation pulse originating from the microwave transmitter/receiver unit aboard the ship by transmitting a pulse upon a received signal. The two way travel time of the signal is easily converted to distance to give a position by standard trilateration procedures.

These systems have enjoyed considerable success but there are four major disadvantages. First they are expensive to acquire. A typical shipboard system is expensive and a minimum of four shore stations is required to provide redundancy for temporary blocking, system failure and poor geometry. Secondly the shore stations require power to operate, typically 110 volts AC or 24 volts DC. Thirdly, the equipment requires maintenance. Maintenance can arise from electronic failure, the necessity for periodic refueling of thermo electric generators in isolated areas and battery replacement. Fourthly, most available systems must be recalibrated every time a unit is changed.

As will be appreciated may attempts have been made to solve the above problems, particularly of expense. An approach has been to attempt to convert a standard marine radar into a precision positioning system, one that will automatically output a position in latitude and longitude or grid coordinates. The radar generates a pulse which is reflected like an echo from the surrounding features which is, of course, the underlying principle of radar. The received signal is displayed in graphic form on a Plan Position Indicator (PPI).

Obviously to produce a useful position coordinate, the radar has to use specific reference reflectors at known, surveyed positions on shore and furthermore these reflectors must be capable of being discriminated by the radar from radar clutter. Radar clutter is radar signals from other sources, interfering with the signal of interest, as well as reflections of the signal of interest from other features. In this regard it must be borne in mind that the ship is in a constricted area and in the circumstances radar clutter is a major problem.

In 1977 the Dominion Marine Association (DMA), in conjunction with Associated Controls and Communications Inc. (ACCI) in Massachusetts, proposed a precise radar navigation system (PRANS) to provide assistance in docking and to allow automatic navigation to within small tolerances. The proposed system used a minicomputer to calculate the ship's position relative to a desired course calculated from range measurements to a number of shore-based or passive retro-reflectors at known locations and using the ship's radar. Continuous navigation was realized by switching automatically between sets of retro-reflectors stationed along the course.

Trials and demonstrations of the above system indicated that although PRANS showed promise, a number of problems needed to be resolved before the system could be declared operational. A particular disadvantage was that although PRANS performed satisfactorily in static tests it tended to be unreliable during dynamic test due to frequent loss of signal. Failure to acquire or maintain adequate signal strength and inconsistencies in performance were attributed to clutter and to multipath induced fading. System performance was improved in the presence of clutter and multipath by resorting to larger retro-reflectors and to constellations of retro-reflectors, both serving to increase the effective radar cross section and introduce space diversity. The problem or retro-reflector acquisition and tracking was deemed fundamental to the successful operation of the system, which is presumed to lie in the area of retro-reflector design.

In a study conducted at McMaster University in Hamilton in 1983 it was found that the use of polarisation diversity and space diversity provided a solution to many of the shortcomings of the ACCI equipment. Subsequent to that study a trihedral reflector, equipped with a twist grid to rotate the polarization of the incident radiation, was the subject of a Canadian patent application.

The trihedral reflector that was the subject of the above Canadian patent application relies on polarisation as the radar discriminant. The radar uses a dual polarised antenna so that the transmission is made using (say) horizontal polarisation and the reception is then made on the orthogonal polarisation, that is vertical. In this way indication of the passive reflector by the radar is established in spite of the presence of strong radar clutter arising from unwanted reflections from fixed objects in the vicinity.

However, a disadvantage still exists. Present applicants in experimenting under license with the system according to the above Canadian patent application experienced delays in the delivery of a dual polarised antenna. Because of the complexity production of a prototype was expected to take more than a year. Furthermore, the prototype is not usable as a marketable production system in view of its high cost. As a result of the above the present applicants investigated alternative methods of reducing the complexity of design and cost of a dual polarised antenna.

The phenomenon of circular polarization is well known. Indeed some commercially available radar systems have as an option circular polarisation mode in addition to the standard horizontal polarisation mode. This circular polarisation mode is used in adverse weather conditions, typically rain and snow, to suppress the weather clutter from the precipitation. Rain and snow are reflectors that are spherical and symmetrical. The detection of desired radar imagery, when using circular polarisation, is mainly due to the fact that numerous echos are asymmetrical, although the signal level is generally reduced when compared with like linear polarisation.

Circular polarisation has a unique feature of not being able to detect its own echo as a symmetrical reflector will return a circularly polarised signal rotating in the opposite sense to the outgoing signal. That is an outgoing right hand rotation will reflect as a left hand rotation.

A dihedral, that is a two sided, corner reflector, returns an echo of the same sense as the outgoing polarisation when using a circularly polarised antenna. Dihedral reflectors are referred to as "double bounce" or "even bounce", which simply means that the outgoing rotation of the circular polarisation is reversed twice as it bounces off the two sides of the dihedral and the antenna transmitting the signal can therefore receive the echo without any losses while other symmetrical reflectors are suppressed.

However, a conventional trihedral or three sided corner reflector returns an echo of the opposite sense to the outgoing polarisation when using a circularly polarised antenna. This is referred to as an "odd bounce" reflector and behaves the same way as a single bounce symmetrical reflector, that there is a total loss of the signal. In this regard, it is normal to post warnings in radar operation manuals stating that when using circular polarisation most spherical navigational buoys may not show up. Neither will the trihedral radar reflectors commonly mounted on top of these buoys. While the orientation of the twist grid is critical in the invention of the above Canadian patent application, the trihedral twist reflector, when used with circular polarisation can be oriented to best suit the reflector mount.

The conversion of standard horizontally polarised marine radar can easily be carried out to convert to circular polarisation in fact, the radar electronics require little or no modifications at all. A horizontally polarised radar antenna can equally easily be converted to circular polarisation. Such an antenna is of low cost as is the radar. The modification costs are very low.

Accordingly, the present invention provides a locating system for moving objects, particularly ships, that is of markedly lower cost than prior art systems, exhibits excellent reflector discrimination and requires very little maintenance.

## SUMMARY OF THE INVENTION

Accordingly, the present invention, in a first aspect, is a locating system for a moving object comprising:
a radar source able to emit a circularly polarised radar beam; and
a plurality of even bounce reflectors to be positioned at predetermined locations around the moving object.

In a further aspect the present invention is a method of determining the position of a moving object comprising:
sending from the moving object a circularly polarised radar beam towards an area known to contain even bounce reflectors;
receiving the reflected signal; and computing the position of the moving object.

## DESCRIPTION OF THE DRAWINGS

Aspects of the invention are illustrated, merely by way of example, in the accompanying drawings in which:

Figure 1 illustrates a dihedral reflector and its ability to reflect a radar beam with its typical beam pattern;

Figure 2 illustrates the operation of a trihedral reflector with its beam pattern;

Figure 3 shows the use of a plurality of dihedral reflectors;

Figure 4 illustrates a trihedral twist reflector useful in a preferred embodiment of the present invention;

Figure 5 shows a detail of the trihedral twist reflector of Figure 4;

Figures 6 and 7 illustrate the even bounce characteristics of the reflectors useful in the invention; and

Figure 8 shows a tower carrying a cluster of reflectors.

## DESCRIPTION OF THE PREFERRED EMBODIMENTS

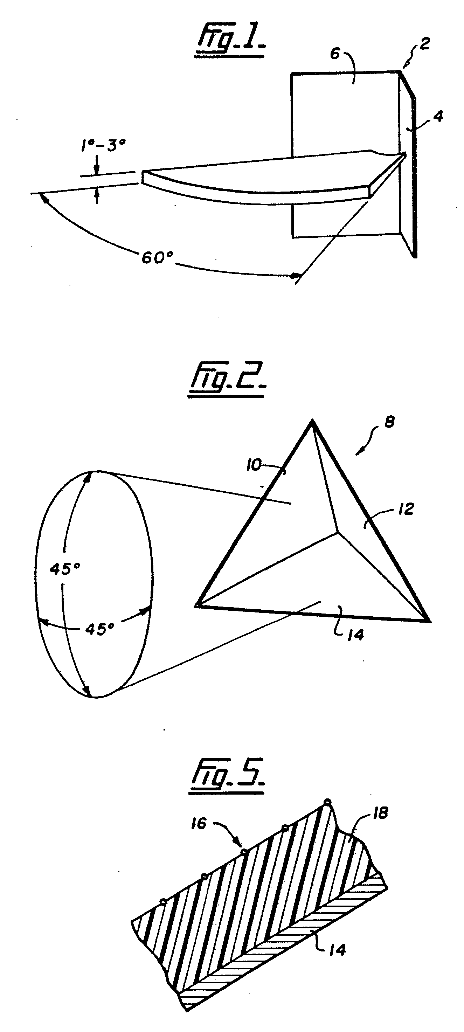

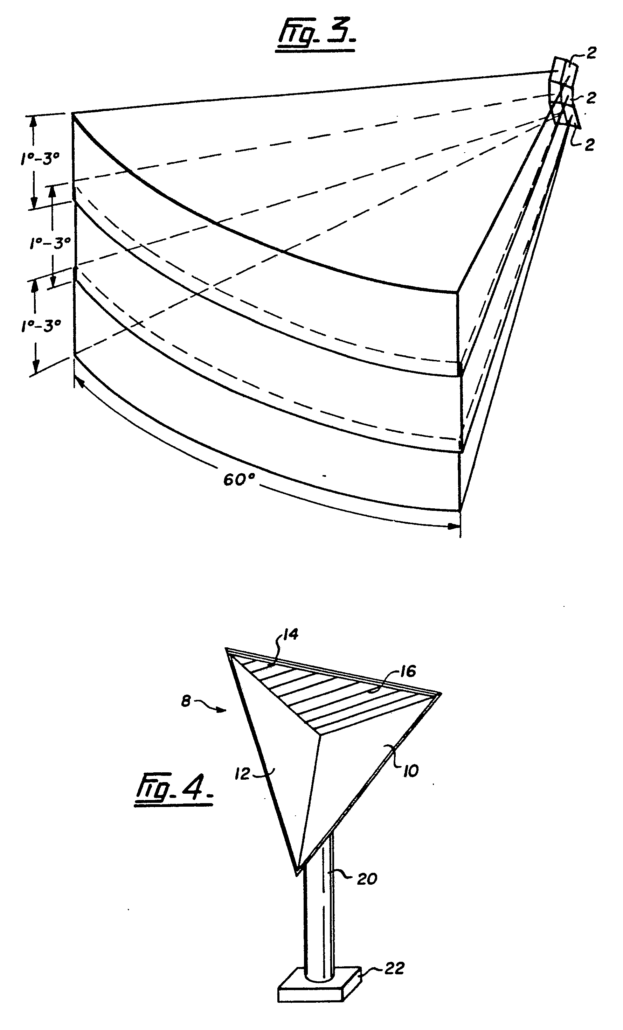

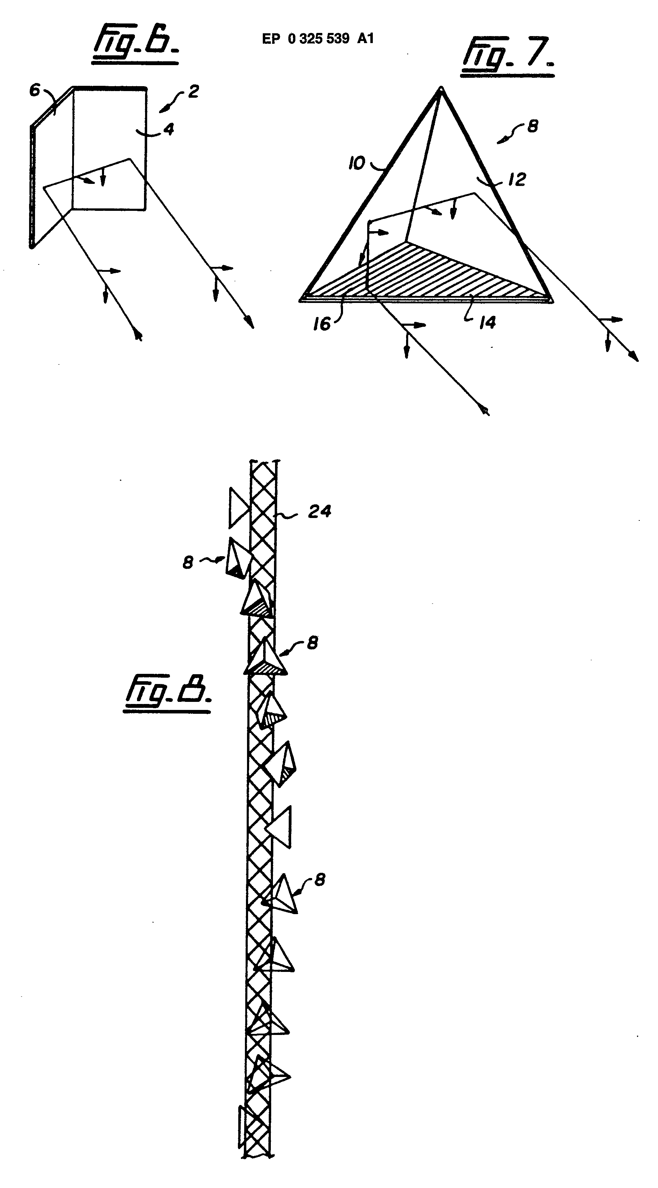

The drawings show in Figure 6 a dihedral 2, or a two sided corner reflector able to return an echo in the same sense as the outgoing polarisation when using a circularly polarised antenna. As shown in Figure 6 the reflector comprises two plates 4 and 6 typically of aluminum, perpendicular to each other. The dihedral reflector, in the system of the present invention is simply mounted on a pole, pylon or lightweight tower in a desired area. The dihedral corner reflector has a very broad beam angle in azimuth but it is extremely sharp in the vertical. The prior art acknowledges approximately ± 30° in azimuth and approximately 1°-3° in the vertical. This is shown Figure 1. To avoid the disadvantage of sharpness a plurality of reflectors 2 may be used, as shown in Figure 3. Different dihedral sections 2 at slightly different vertical angles, typically of 1.5° change of angle between the adjacent reflectors, can easily be joined together to cover any radar elevation quite easily. Using this system, with 1° beam width for height and a distance of 1 km between the ship and the vertical distance covered would be approximately 17 meters for each section. The beams preferably overlap as shown in Figure 3. Consideration in design has to be be given to retain phase coherence in this configuration and the individual reflectors might have to be slightly offset to keep the same distance with respect to the vessel.

A typical dihedral reflector would have sides 4 and 6 measuring 24" by 48" with an approximate radar cross section of 13500 sq. meters but substantially smaller reflectors can be used.

In conducting a test with an antenna modified for circular polarisation and a dihedral over a distance of 0.68 km in a radar hostile environment, the result showed excellent discrimination in detecting the reflectors 2. T.he reflector 2 was the only target showing on the standard PPI display after adjustments of the gain and sensitivity time control on the panel controls of the radar. Thus the dihedral returned a stronger echo than any other reflector illuminated at a range of 4 km.

In this system the polariser and the dihedral reflector were assembled in a very short time in order to prove the concept without any attempt to optimize the designs.

A standard trihedral corner reflector 8 has a beam pattern of approximately 45° in azimuth and in elevation, as shown in Figure 2. Each reflector has flat surfaces, 10, 12 and 14 with an open front.

Figure 4 shows a modification of the standard trihedral reflector 8 by incorporation of a grid 16 adjacent one side of the trihedral reflector 8 and positioned, as shown in Figure 5, about 1.65 centimeters above the base 14 of the trihedral, that is about half the wavelength of the radar beam. The wires are typically at a separation of about 5.5 mm and are separated from the base by a dielectric 18, for example expanded polystyrene. Because of the presence of the grid the trihedral reflector behaves as an even bounce reflector and therefore will return a circular polarised signal in the like sense.

Figure 4 shows the reflector 8 inserted for weather protection and positioned on a pole 20 on a bar 22. Figures 6 and 7 simply illustrate the even bounce characteristics of circularly polarised radar using the dihedral reflector in Figure 6 and the trihedral reflector, including a twist grid, in Figure 7. Figure 8 shows the arrangement of a plurality or cluster of trihedral reflectors arranged in a generally helical pattern on a tower 24 at a predetermined location.

Trihedral reflectors are shown on tower 24 but dihedral reflectors can equally well be used. The use of a cluster of reflectors as shown in Figure 8 expands the relatively narrow beam pattern of the individual reflectors in azimuth and deals with multipath propagation problems through vertical separation.

The present invention thus provides a locating system for a moving object, particularly ships, that displays excellent discrimination. Although circularly polarised radar is known and although dihedral and standard trihedral reflectors are known the use of circular polarisation in conjunction with dihedral corner reflectors or in conjunction with trihedral reflectors that include a grid have not been used as radar discriminators. It is postulated that there are two reasons for this. The sharp vertical beam pattern may not make it suitable for a large number of vessels with radar and antenna masts ranging over a wide variety of elevations. It also appears that most approaches to this radar solution were made with the intention of retaining the radar system integrity as a functional radar system in addition to turning it into a positioning system.

Furthermore, the prior art does not show that anyone seriously considered circular polarisation with a trihedral twist reflector, presumably again on the grounds that they wish to maintain the integrity of the radar as a radar as well as a positioning system, since circular polarisation will reduce returns from symmetrical reflectors, which limits the system's effectiveness as a radar.

It should be emphasized that the application does not use orthogonality of linear polarisation, as used in the above Canadian patent application. The present application uses the opposite sense of rotation to discriminate. Thus the invention works with the dihedral where there is no use of a twist grid or other extraordinary conversion of polarisation. The twist grid does invert vertical to horizontal and vice versa but during the circular rotation process the orientation would also go through parallel and perpendicular incidence with respect to the grid. At that point no conversion of the linear components takes place. It is the overall sense of rotation of circular polarisation that is the discriminant in the present invention.

The present invention thus provides a locating system for a moving object, especially ships, that is of great simplicity, reliability, durability and low cost. Major antenna design is not required. Instead an easy low cost modification of existing antennae can be carried out. The radar portion of the equipment is presently on the market and existing, more common conventional radars can easily be converted to produce circular polarisation radar. In this regard a number of existing radar systems already have a circular polarisation as an option. The reflectors are easy to produce and of relatively simple construction. Furthermore, if dihedral reflector sites are carefully erected and set back from the operating area the vertical beam pattern will be sufficient to cover a wide variety of mast elevations. Thus the apparent disadvantage of the narrow vertical beam pattern with this type of reflector can be easily avoided.

## Claims

1. A locating system for a moving object comprising:
a radar source able to emit a circularly polarised radar beam; and
a plurality of even bounce reflectors to be positioned at predetermined locations around the moving object.

2. A system as claimed in claim 1 in which the reflectors are dihedral reflectors.

3. A system as claimed in claim 2 in which each reflector is a cluster of dihedral reflectors at one location.

4. A system as claimed in claim 1 in which the reflectors are trihedral twist reflectors including a grid able to convert the polarisation of a radar beam.

5. A system as claimed in claim 4 in which the grid comprise a plurality of wires arranged parallel to an edge of the trihedral reflector.

6. A system as claimed in claim 4 in which the reflectors comprise a cluster of trihedral twist reflectors.

7. A method of determining the position of a moving object comprising:
sending from the moving object a circularly polarised radar beam towards an area known to contain even bounce reflectors;
receiving the reflected signal; and computing the position of the moving object by
measuring the distances and bearings of the reflectors and through the process known as range/range and range/bearing calculation.

8. A method as claimed in claim 7 in which the reflector is a dihedral reflector.

9. A method as claimed in claim 7 in which the reflector is a cluster of dihedral reflectors at a single location within the area.

10. A method as claimed in claim 7 in which the reflector is a trihedral reflector formed with a twist grid.

11. A method as claimed in claim 10 in which the trihedral reflectors are formed as a cluster of reflectors at a single location within the area.

**Fig.1.**

1°–3°

60°

**Fig.2.**

45°

45°

**Fig.5.**

_Fig. 3._

1°-3°

1°-3°

1°-3°

60°

2

2

2

_Fig. 4._

8

14

16

12

10

20

22

_Fig. 6._

_Fig. 7._

_Fig. 8._

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-4 104 634 (P.O. GILLARD et al.) * Column 5, line 30 - column 10, line 33; figures 1-18 * | 1-3,7-9 | G 01 S 13/02 H 01 Q 15/18 |
| Y | | 4-6,10-11 | |
| Y | DE-B-1 196 255 (TELEFUNKEN) * Whole document * | 4-6,10,11 | |
| A | US-A-2 520 008 (A.P. KING) * Column 3, lines 5-50; figures 1-5 * | 3,6,8,11 | |
| A | GB-A- 696 834 (MARCONI) * Page 1, lines 15-82 * | 3,6,8,11 | |
| A | FR-A-2 257 095 (LIGNES TELEGRAPHIQUES) * Page 7, lines 8-33; figure 5 * | 1-3,7-9 | |
| A | 15TH EUROPEAN MICROWAVE CONFERENCE, Paris, 9th-13th September 1985, pages 137-142, Paris, FR; S. HAYKIN et al.: "Polarimetric radar for precise navigation along confined waterways" * Whole document * | 1,7 | |

TECHNICAL FIELDS
SEARCHED (Int. Cl.4)

G 01 S
H 01 Q

The present search report has been drawn up for all claims

| Place of search | Date of completion of the search | Examiner |
|---|---|---|
| THE HAGUE | 12-04-1989 | VAN WEEL E.J.G. |

EPO FORM 1503 03.82 (P0401)